# EUROPÄISCHE PATENTANMELDUNG

(11) **EP 3 764 001 A1**
(43) Veröffentlichungstag der Anmeldung: **13.01.2021**
(21) Anmeldenummer: 20185178.9
(22) Anmeldetag: 10.07.2020
(51) Int. Cl.: F24D 3/18, F24D 19/08, F24D 19/10, F24F 11/36, B01D 19/00

(54) **VERFAHREN UND VORRICHTUNG ZUR ENTGASUNG EINER FLÜSSIGKEIT IN EINEM KREISLAUF, INSBESONDERE IN EINEM HEIZKREISLAUF EINES WÄRMEPUMPENSYSTEMS**

(30) Priorität: 12.07.2019 DE 102019118945
(71) Anmelder: Vaillant GmbH, 42859 Remscheid (DE)
(72) Erfinder: Wohlfeil, Arnold, 42799 Leichlingen (DE)
(74) Vertreter: Popp, Carsten

(57) **Zusammenfassung**

Die Erfindung betrifft ein Verfahren zur Entgasung einer Flüssigkeit in einem geschlossenen Kreislauf (1), der zumindest zum Teil im Inneren eines Gebäudes liegt und über einen Wärmetauscher (7) mit einem Kältemittelkreislauf (20) in Verbindung steht, wobei mittels einer Saugstrahlpumpe (10) ein Unterdruck in einem Teilvolumen (12) der Flüssigkeit erzeugt und dabei entstehende Blasen (19) durch die Saugstrahlpumpe (10) zu einem Entlüfter (14) geführt werden, der in die freie Umgebung mündet. Die Erfindung betrifft auch eine Vorrichtung zur Entgasung einer Flüssigkeit in einem solchen Kreislauf (1) mit einer Umwälzpumpe (3) und einer in einem Bypass (2) angeordneten Saugstrahlpumpe (10) wobei in einem Teilvolumen (12) der Flüssigkeit zwischen dem Kreislauf (1) und der Saugstrahlpumpe (10) ein verringerter Druck zur Entgasung erzeugbar ist und wobei bei der Entgasung entstehende Blasen (19) durch eine Mischkammer (11) der Saugstrahlpumpe (10) dem Bypass (2) zuführbar und dort durch einen Entlüfter (14) entfernbar sind. Die vorliegende Erfindung erlaubt es, einen Heizkreislauf kontinuierlich oder bei Bedarf zu entgasen, um z. B. in einem Wärmepumpensystem auch geringe Mengen von brennbarem Kältemittel, z. B. R32 oder R290, zu entfernen, wenn diese in einen geschlossenen Heizkreislauf in einem Gebäude gelangt sind, wo sie aus Sicherheitsgründen nicht vorhanden sein sollen. Durch geeignete Sensoren (18) kann auch zwischen Luft und Kältemittel am Entlüfter (14) unterschieden werden, so dass bei Auftreten von Kältemittel im Heizkreislauf auch ein Alarm und/oder eine Abschaltung des Systems ausgelöst werden kann.

## Beschreibung

Die Erfindung liegt auf dem Gebiet der Wärmepumpensysteme, die insbesondere zur Beheizung oder Kühlung von Wohngebäuden und/oder zur Warmwasserbereitung benutzt werden. Solche Wärmepumpensysteme benötigen zwei oder mehr Kreisläufe, von denen mindestens einer ein geschlossener Kreislauf ist, der zumindest zum Teil im Inneren eines Gebäudes liegt und typischerweise im Wesentlichen mit Wasser oder Sole als Wärmeträgermedium betrieben wird. Über einen Wärmetauscher findet meist ein Wärmeaustausch mit einem zweiten Kreislauf statt, der typischerweise mit einem Kältemittel betrieben wird. Bevorzugt werden natürliche Kältemittel eingesetzt, wobei es sich um brennbare Stoffe handeln kann. Ein solches Kältemittel ist beispielsweise unter der Bezeichnung R290 bekannt. Häufig werden Alkane, zu denen beispielsweise auch Propan gehört, als Kältemittel eingesetzt, da sie geeignete Eigenschaften bezüglich ihres Siedepunktes, Gefrierpunktes und der Wärmekapazität haben. Es können aber auch künstliche (brennbare oder nicht brennbare) Kältemittel eingesetzt werden, beispielsweise ein unter der Bezeichnung R32 bekanntes.

Bei Wärmetauschern zwischen verschiedenen Wärmeträgermedien, die möglicherweise auch noch unter unterschiedlichen Drücken vorliegen, ist es besonders wichtig, eventuelle Leckagen feststellen bzw. die Folgen zumindest von kleinen Leckagen sicher beherrschen zu können. Insbesondere im Fall von Wärmepumpensystemen ist es wünschenswert, frühzeitig auch geringe Leckagen feststellen zu können, insbesondere wenn es sich um das Eindringen von brennbarem Kühlmittel in einen geschlossenen Kreislauf (mit z. B. Wasser oder Sole als Wärmeträgermedium), der auch im Inneren eines Gebäudes verläuft, handelt. Selbst geschlossene Kreisläufe sind nicht immer vollständig gasdicht gegenüber ihrer Umgebung oder sammeln eingedrungenes Gas zunächst an bestimmten Stellen an. Da das Eindringen von brennbaren Gasen in Heizkreisläufe (insbesondere wenn diese im Inneren von Gebäuden verlaufen) aus Sicherheitsgründen grundsätzlich vermieden werden soll, ist es wichtig, das unerwünschte Eindringen von Kältemittel aus einem zweiten Kreislauf in einen ersten Kreislauf feststellen und bei kleinen Leckagen eindringendes Kältemittel sicher abführen zu können. In geringen Mengen lösen sich Luft (bzw. deren Bestandteile) und Kältemittel in Wasser oder Sole, so dass eine mechanische Abscheidung nicht immer in Betracht kommt.

Nach dem Stand der Technik gibt es verschiedene Entgasungseinrichtungen bzw. Verfahren zur Entgasung, die zunächst zur Abscheidung von Luft oder deren Bestandteilen entwickelt wurden, aber auch für die Abscheidung von Kältemittel eingesetzt werden können, sofern eine zugehörige Entlüftungsleitung nicht innerhalb eines Gebäudes, sondern in der freien Umgebung mündet.

Aufgabe der vorliegenden Erfindung ist es, ein Verfahren und eine Vorrichtung zu schaffen, die kostengünstig und mit geringem apparativem Aufwand eine Entgasung auch von in einer Flüssigkeit eines Kreislaufs gelösten Gasen, insbesondere Kältemittel, bewirken können, so dass gelöste Gase sicher entfernt und bei Bedarf auch analysiert werden können. Im Normalbetrieb soll so eine Entfernung von Luft oder deren Bestandteilen erreicht werden, bei Leckagen zu anderen Kreisläufen auch die Entfernung von Kältemittel.

Zur Lösung dieser Aufgabe dienen ein Verfahren und eine Vorrichtung gemäß den unabhängigen Ansprüchen. Vorteilhafte Ausgestaltungen und Weiterbildungen der Erfindung sind in den jeweiligen abhängigen Ansprüchen angegeben. Die Beschreibung, insbesondere im Zusammenhang mit den Figuren, veranschaulicht die Erfindung und gibt weitere Ausführungsbeispiele an.

Das erfindungsgemäße Verfahren zur Entgasung einer Flüssigkeit in einem geschlossenen Kreislauf, der zumindest zum Teil im Inneren eines Gebäudes liegt und über einen Wärmetauscher mit einem Kältemittelkreislauf in Verbindung steht, erzeugt mittels einer Saugstrahlpumpe einen Unterdruck in einem Teilvolumen der Flüssigkeit, wobei dabei entstehende Blasen durch die Saugstrahlpumpe zu einem Entlüfter geführt werden. Die Erfindung nutzt den Effekt aus, dass die Löslichkeit von Gasen in einer Flüssigkeit vom Druck abhängt, so dass in der Flüssigkeit gelöste Gase zumindest teilweise ausgasen, wenn in einem Teilvolumen eines Kreislaufes ein geringerer Druck herrscht. Dies wird durch eine Saugstrahlpumpe erreicht, die an einer geeigneten Stelle des Kreislaufes einen Teil der Flüssigkeit mit ihrem Sauganschluss ansaugt, wodurch in diesem Bereich ein Unterdruck entsteht.

In einer bevorzugten Ausführungsform der Erfindung befindet sich die Saugstrahlpumpe in einem Bypass an dem geschlossenen Kreislauf und wird mittels einer in dem Kreislauf vorhandenen Druckdifferenz oder mittels einer Bypass-Pumpe betrieben wird. Die Strömung in dem Bypass treibt die Saugstrahlpumpe an, so dass diese mit ihrem Sauganschluss zusätzlich Flüssigkeit irgendwo aus dem Kreislauf ansaugen kann.

Bevorzugt wird die Entgasung in einer Entgasungsleitung als Teilvolumen durchgeführt, die zwischen einem Saugbereich einer Umwälzpumpe im Kreislauf und einer Mischkammer der Saugstrahlpumpe erfolgt, wobei entstehende Blasen stromabwärts von der Saugstrahlpumpe abgeschieden und in die freie Umgebung entlüftet werden. In der so angesaugten Flüssigkeit entsteht ein Unterdruck, was bei Vorhandensein von gelöstem Gas zur Bildung von Blasen führt, die die Saugstrahlpumpe durchlaufen und dahinter noch in dem Bypass abgeschieden werden können, bevor sie sich möglicherweise wieder in der Flüssigkeit lösen.

Falls in einem Heizkreislauf keine günstigen Bedingungen zur Ausnutzung einer für den Betrieb der Saugstrahlpumpe erforderliche Druckdifferenz vorliegen, kann dies durch Anbringen und Einstellen von geeigneten Blenden im Kreislauf und/oder im Bypass bewirkt werden. Alternativ oder additiv kann die Strömung im Bypass auch durch eine Bypass-Pumpe aufrechterhalten werden.

Im Bereich des Entlüfters kann mittels eines Gassensors das Auftreten von Gas und/oder die Art des auftretenden Gases festgestellt werden. Dies ist ein wichtiger Vorteil der Erfindung, weil einerseits das Eindringen von Kältemittel sehr frühzeitig auch bei kleinen Leckagen erkannt und andererseits bei Bedarf zwischen verschiedenen im Kreislauf gelösten Gasen unterschieden werden kann.

Einer speziellen Ausgestaltung der Erfindung wird bei Auftreten von Kältemittel an dem Gassensor ein Alarm und/oder eine Abschaltung des geschlossenen Kreislaufes ausgelöst. So kann im normalen Betrieb Luft entgast werden, während bei Kältemittel im Kreislauf weitere Maßnahmen durchgeführt werden können.

Eine erfindungsgemäße Vorrichtung zur Entgasung einer Flüssigkeit in einem geschlossenen Kreislauf, der zumindest zum Teil im Inneren eines Gebäudes liegt und über einen Wärmetauscher mit einem Kältemittelkreislauf in Verbindung steht, mit einer Umwälzpumpe und einer in einem Bypass angeordneten Saugstrahlpumpe ermöglicht in einem Teilvolumen der Flüssigkeit zwischen dem Kreislauf und der Saugstrahlpumpe die Einstellung eines verringerten Druckes zur Entgasung, wobei bei der Entgasung entstehende Blasen durch eine Mischkammer der Saugstrahlpumpe dem Bypass zuführbar und dort durch einen Entlüfter entfernbar sind. Diese Vorrichtung beeinflusst den Kreislauf nur in geringem Maße, da alle abgesaugte Flüssigkeit nach Entgasung zurückgeführt wird, erlaubt aber im Laufe der Zeit eine weitgehende Entgasung der gesamten Flüssigkeit (nach einer genügenden Zahl von Umläufen).

Bevorzugt zweigt der Bypass an einer Abzweigung stromabwärts der Umwälzpumpe vom Kreislauf ab und mündet stromaufwärts der Umwälzpumpe an einer Einmündung wieder in den Kreislauf. Auf diese Weise gibt es (wenn die Umwälzpumpe läuft) jedenfalls eine Druckdifferenz, die die Saugstrahlpumpe antreiben kann.

Das Teilvolumen zur Entgasung ist bevorzugt eine von einem Saugbereich der Umwälzpumpe ausgehende Entgasungsleitung ist, die in eine Mischkammer der Saugstrahlpumpe mündet. Im Saugbereich der Umwälzpumpe herrscht schon ein etwas geringerer Druck als in anderen Teilen des Kreislaufes, so dass durch eine weitere Verringerung des Druckes in einem dort beginnenden Teilvolumen die größte Wirkung zur Entgasung erzielt.

Bevorzugt stromabwärts der Saugstrahlpumpe (und in möglichst geringer Entfernung davon) ist eine Entgasungskammer mit dem Entlüfter angeordnet ist. Im Teilvolumen gebildete Blasen wandern mit der Strömung durch die Saugstrahlpumpe und werden in der Entgasungskammer abgeschieden, so dass sie durch den Entlüfter in die freie Umgebung abgeführt werden können.

Um die für die Saugstrahlpumpe zur Verfügung stehende Druckdifferenz zu erhöhen, ist es vorteilhaft, dass zwischen der Abzweigung und der Einmündung des Bypasses in den Kreislauf mindestens eine einen Druckabfall bewirkende Komponente angeordnet ist. Dies können z. B. übliche Heizkreisläufe sein, oder ein Wärmetauscher.

Alternativ oder additiv kann eine Strömung in dem Bypass auch durch eine Bypass-Pumpe und/oder bei laufender Umwälzpumpe durch Einstellung von Blenden im Kreislauf und/oder im Bypass aufrechterhalten werden.

Vorzugsweise ist in der Entgasungskammer oder an dem Entlüfter ein Gassensor angeordnet ist. Unter Gassensor wird hier jeder Sensor verstanden, der das Vorhandensein und/oder die Art eines Gases erkennen kann. Auch das Volumen des pro Zeiteinheit entfernten Gases kann gegebenenfalls gemessen werden, um eine Information über die Größe einer eventuellen Leckage zu bekommen.

So ist in einer besonders bevorzugten Ausführungsform der Gassensor mit einer Einrichtung zur Auslösung eines Alarms und/oder einer Abschaltung des geschlossenen Kreislaufes bei Auftreten von Kältemittel oder bei Überschreiten eines Grenzwertes am Gassensor verbunden.

Ein schematisches Ausführungsbeispiel der Erfindung, auf das diese jedoch nicht beschränkt ist, und die Funktionsweise des erfindungsgemäßen Verfahrens werden nun anhand der Zeichnung detailliert erläutert. Es zeigt:

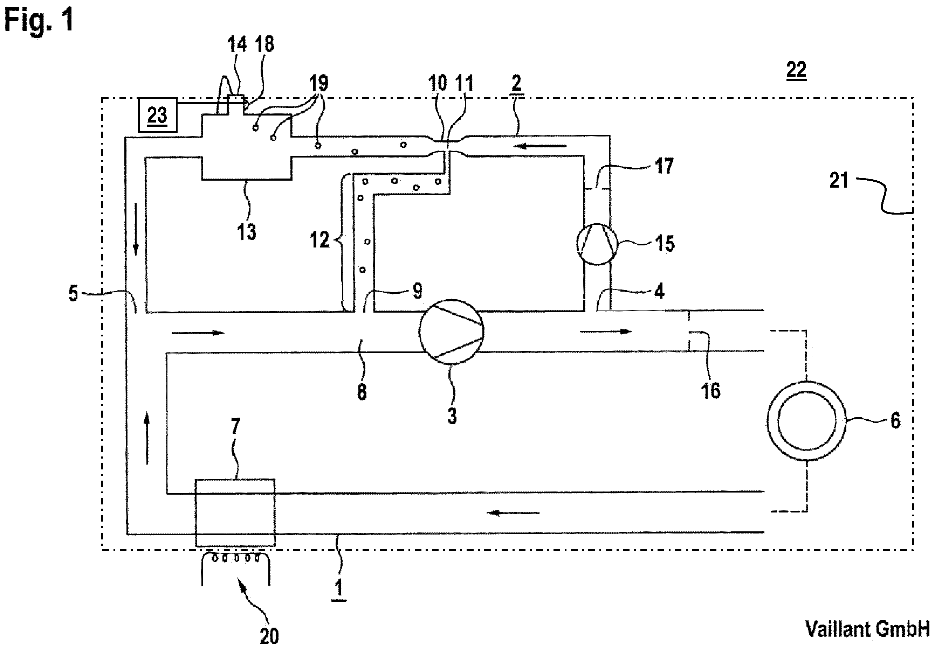

Fig. 1: schematisch eine erfindungsgemäße Vorrichtung zur Entgasung.

Figur 1 zeigt schematisch ein Ausführungsbeispiel einer hier vorgeschlagenen Vorrichtung in einem Gebäude 21. Ein geschlossener Kreislauf 1, der vorzugsweise Teil eines hier nicht weiter dargestellten Wärmepumpensystems ist, ist gefüllt mit einer Flüssigkeit als Wärmeträgermedium, vorzugsweise mit Wasser oder Sole. Eine Umwälzpumpe 3, die an geeigneter Stelle im Kreislauf 1 angeordnet werden kann, treibt die Flüssigkeit an, so dass diese z. B. zu einzelnen Heizkreisläufen 6 gelangen kann. Der Kreislauf 1 weist auch einen Wärmetauscher 7 auf, durch den Wärme zugeführt (eventuell auch abgeführt) wird. Dieser Wärmetauscher 7 kann beispielsweise die Verbindung zu einem Kältemittelkreislauf 20 sein, in dem ein Kältemittel zirkuliert, insbesondere ein natürliches (aber möglicherweise brennbares) Kältemittel, beispielsweise R290, oder ein künstliches, beispielsweise R32. In dem Wärmetauscher 7 steht das Kältemittel im Normalbetrieb unter höherem Druck als die Flüssigkeit im Kreislauf 1, so dass bei einer eventuellen Leckage Kältemittel in den ersten Kreislauf 1 übertreten kann. Dies ist unerwünscht und kann sogar ein Risiko darstellen, weshalb die vorliegende Erfindung sich mit der Beherrschung solcher Vorgänge beschäftigt. Dazu gibt es an dem Kreislauf 1 einen Bypass 2, der an einer Abzweigung 4 von dem Kreislauf 1abzweigt und bei einer Einmündung 5 wieder in den Kreislauf 1 mündet. In dem Bypass 2 befindet sich eine Saugstrahlpumpe 10 mit einer Mischkammer 11 und stromabwärts davon eine Entgasungskammer 13 mit einem Entlüfter 14 und optional einem Gassensor 18. Eine Entgasungsleitung 9 führt von einem Saugbereich 8 der Umwälzpumpe 3 zu der Mischkammer 11 der Saugstrahlpumpe 10. Diese Entgasungsleitung 9 bildet ein Teilvolumen 12 des gesamten Systems, in dem beim Betrieb der Saugstrahlpumpe 10 ein geringerer Druck herrscht als im übrigen System, so dass gelöste Gase dort ausgasen und Blasen 19 bilden. Diese gelangen durch die Saugstrahlpumpe 10 mit der Strömung (siehe Pfeile) im Bypass 2 zur Entgasungskammer 13 und dem Entlüfter 14 in die Umgebung 22. Bei Auftreten von Gas kann der Gassensor 18 dies feststellen und ggf. auch die Art des Gases ermitteln. Der Gassensor 18 ist mit einer Einrichtung 23 zur Auslösung eines Alarms und/oder einer Abschaltung des geschlossenen Kreislaufes 1 bei Auftreten von Kältemittel oder bei Überschreiten eines Grenzwertes verbunden. Jedenfalls werden beim Betrieb des Bypasses 2 eventuell in der Flüssigkeit des Kreislaufs 1 gelöste Gase nach und nach entgast und entfernt. Falls eine zum Betrieb des Bypasses 2 erforderliche Druckdifferenz zwischen Abzweigung 4 und Einmündung 5 nicht anders aufrechterhalten werden kann, können Blenden 16, 17 im Kreislauf 1 und/oder im Bypass 2 vorgesehen werden und/oder es kann eine Bypass-Pumpe 15 zur Unterstützung der Strömung im Bypass 2 vorhanden sein. Eine Saugstrahlpumpe wird typischerweise durch eine Verengung in einem Rohr gebildet, an der seitlich eine Leitung einmündet. Durch die Verengung entsteht in einer Strömung durch das Rohr ein Unterdruck, so dass die seitliche Leitung ein Gas oder eine Flüssigkeit ansaugt. Im vorliegenden Fall führt eine Strömung in dem Bypass 2 also zu einer Saugwirkung in der Entgasungsleitung 9. Die Strömung in dem Bypass 2 kann deutlich weniger Volumen pro Zeiteinheit sein als in dem Kreislauf 1, beispielsweise nur 1 bis 20 %, vorzugsweise 5 bis 10 %, je nachdem, wie wirksam und schnell eine Entgasung erfolgen soll.

Die vorliegende Erfindung erlaubt es, einen Heizkreislauf kontinuierlich oder bei Bedarf zu entgasen, um z. B. in einem Wärmepumpensystem auch geringe Mengen von brennbarem Kältemittel zu entfernen, wenn diese in einen geschlossenen Heizkreislauf in einem Gebäude gelangt sind, wo sie aus Sicherheitsgründen nicht vorhanden sein sollen. Durch geeignete Sensoren kann auch zwischen Luft und Kältemittel am Entlüfter unterschieden werden, so dass bei Auftreten von Kältemittel im Heizkreislauf auch ein Alarm oder eine Abschaltung des Systems ausgelöst werden kann.

### Bezugszeichenliste

- 1: geschlossener Kreislauf
- 2: Bypass zur Entgasung
- 3: Umwälzpumpe
- 4: Abzweigung Bypass
- 5: Einmündung Bypass
- 6: Heizkreise
- 7: Wärmetauscher
- 8: Saugbereich der Umwälzpumpe
- 9: Entgasungsleitung
- 10: Saugstrahlpumpe
- 11: Mischkammer
- 12: Teilvolumen
- 13: Entgasungskammer
- 14: Entlüfter
- 15: Bypass-Pumpe
- 16: erste Blende im Kreislauf
- 17: zweite Blende im Bypass
- 18: Gassensor
- 19: Blasen
- 20: Kältemittelkreislauf
- 21: Gebäude
- 22: Umgebung
- 23: Einrichtung

## Patentansprüche

1. Verfahren zur Entgasung einer Flüssigkeit in einem geschlossenen Kreislauf (1), der zumindest zum Teil im Inneren eines Gebäudes (21) liegt und über einen Wärmetauscher (7) mit einem Kältemittelkreislauf (20) in Verbindung steht, wobei mittels einer Saugstrahlpumpe (10) ein Unterdruck in einem Teilvolumen (12) der Flüssigkeit erzeugt und dabei entstehende Blasen (19) durch die Saugstrahlpumpe (10) zu einem Entlüfter (14) geführt werden.

2. Verfahren nach Anspruch 1, wobei die Saugstrahlpumpe (10) in einem Bypass (2) an dem geschlossenen Kreislauf (1) mittels einer in dem Kreislauf (1) vorhandenen Druckdifferenz oder mittels einer Bypass-Pumpe (15) betrieben wird.

3. Verfahren nach Anspruch 1 oder 2, wobei die Entgasung in einer Entgasungsleitung (9) als Teilvolumen (12) durchgeführt wird, die zwischen einem Saugbereich (8) einer Umwälzpumpe (3) im Kreislauf (1) und einer Mischkammer (11) der Saugstrahlpumpe (10) erfolgt, wobei entstehende Blasen (19) stromabwärts von der Saugstrahlpumpe (10) abgeschieden und in die freie Umgebung (22) entlüftet werden.

4. Verfahren nach einem der vorhergehenden Ansprüche, wobei eine zum Betrieb der Saugstrahlpumpe (10) erforderliche Druckdifferenz durch Einstellung von Blenden (16, 17) im Kreislauf (1) und im Bypass (2) bewirkt wird.

5. Verfahren nach einem der vorhergehenden Ansprüche, wobei im Bereich des Entlüfters (14) mittels eines Gassensors (18) das Auftreten von Gas und/oder die Art des auftretenden Gases festgestellt wird.

6. Verfahren nach Anspruch 5, wobei bei Auftreten von Kältemittel an dem Gassensor (18) ein Alarm und/oder eine Abschaltung des geschlossenen Kreislaufes (1) ausgelöst wird.

7. Vorrichtung zur Entgasung einer Flüssigkeit in einem geschlossenen Kreislauf (1), der zumindest zum Teil im Inneren eines Gebäudes (21) liegt und über einen Wärmetauscher (7) mit einem Kältemittelkreislauf (20) in Verbindung steht, mit einer Umwälzpumpe (3) und einer in einem Bypass (2) angeordneten Saugstrahlpumpe (10) wobei in einem Teilvolumen (12) der Flüssigkeit zwischen dem Kreislauf (1) und der Saugstrahlpumpe (10) ein verringerter Druck zur Entgasung erzeugbar ist und wobei bei der Entgasung entstehende Blasen (19) durch eine Mischkammer (11) der Saugstrahlpumpe (10) dem Bypass (2) zuführbar und dort durch einen Entlüfter (14) entfernbar sind.

8. Vorrichtung nach Anspruch 7, wobei der Bypass (2) an einer Abzweigung (4) stromabwärts der Umwälzpumpe (3) vom Kreislauf (1) abzweigt und stromaufwärts der Umwälzpumpe (3) an einer Einmündung (5) wieder in den Kreislauf mündet.

9. Vorrichtung nach einem der Ansprüche 7 oder 8, wobei das Teilvolumen (12) zur Entgasung eine von einem Saugbereich (8) der Umwälzpumpe (3) ausgehende Entgasungsleitung (9) ist, die in eine Mischkammer (11) der Saugstrahlpumpe (10) mündet.

10. Vorrichtung nach einem der Ansprüche 7 bis 9, wobei stromabwärts der Saugstrahlpumpe (10) eine Entgasungskammer (13) mit dem Entlüfter (14), der in die freie Umgebung (22) entlüftet, angeordnet ist.

11. Vorrichtung nach einem der Ansprüche 7 bis 10, wobei zwischen der Abzweigung (4) und der Einmündung (5) des Bypasses (2) in den Kreislauf (1) mindestens eine einen Druckabfall bewirkende Komponente (6, 7) angeordnet ist.

12. Vorrichtung nach einem der Ansprüche 7 bis 11, wobei eine Strömung in dem Bypass (2) durch eine Bypass-Pumpe (15) und/oder bei laufender Umwälzpumpe (3) durch Einstellung von Blenden (16, 17) im Kreislauf (1) und im Bypass (2) aufrechterhalten wird.

13. Vorrichtung nach einem der Ansprüche 7 bis 12, wobei in der Entgasungskammer (13) oder an dem Entlüfter (14) ein Gassensor (18) angeordnet ist.

14. Vorrichtung nach Anspruch 13, wobei der Gassensor (18) mit einer Einrichtung (23) zur Auslösung eines Alarms und/oder einer Abschaltung des geschlossenen Kreislaufes (1) bei Auftreten von Kältemittel und/oder bei Überschreiten eines Grenzwertes am Gassensor (18) verbunden ist.
